# EUROPÄISCHE PATENTSCHRIFT

(11) **EP 0 367 955 B1**
(45) Veröffentlichungstag und Bekanntmachung des Hinweises auf die Patenterteilung: **07.04.1993**
(21) Anmeldenummer: 89117468.2
(22) Anmeldetag: 21.09.1989
(51) Int. Cl.: F16J 15/32

(54) **Wellendichtungsring zur Abdichtung in einem geteilten Gehäuse**
Shaft seal for the sealing in a split casing
Joint à lèvres pour l'étanchéité dans un carter en plusieurs parties

(30) Priorität: 09.11.1988 DE 3837976
(43) Veröffentlichungstag der Anmeldung: 16.05.1990
(73) Patentinhaber: GOETZE AG, D-51399 Burscheid (DE)
(72) Erfinder: Jamann, Karl-Heinz, Dipl.-Ing., D-5060 Bergisch-Gladbach (DE); Stephan, Bernd, D-5630 Remscheid-Lennep (DE)

(56) Entgegenhaltungen:
- DE-A- 3 734 149
- US-A- 4 026 563

## Beschreibung

Die Erfindung betrifft einen elastomeren Wellendichtungsring zur Abdichtung rotierender Wellen in einem geteilten aufnehmenden Maschiengehäuse, bestehend aus einem metallischen Gehäusering mit einem etwa rechtwinkligen Querschnitt, an dessen Radialschenkel die mit ihrem Innenumfang radial auf der Welle aufliegende elastomere Dichtlippe anvulkansiert ist, und dessen Axialschenkel am Außenufang mit einem Elastomer beschichtet ist, welches die Sitzfläche beim Einpressen des Wellendichtungsringes in das geteilte Maschinengehäuse bildet, und welches am Außenumfang mindestens zwei ringförmig umlaufende Bereiche (8,9) unterschiedlicher Durchmesser besitzt (US-A-4 026 563).

Metallische Gehäuseringe von Wellendichtungsringen zum Abdichten rotierender Wellen besitzen einen etwa rechtwinkligen Querschnitt, und sie sind in den Elastomerkörper des Wellendichtungsringes einvulkanisiert oder an den Außenflächen anvulkanisiert. Fertigungstechnisch bedingt, entsteht dabei unvermeidbar im Übergangsbereich zwischen Axialschenkel und Radialschenkel des Gehäuseringes ein bogenförmgier Übergangsbereich mit kleinem Übergangsradius. Der Radialschenkel des Gehäuseringes ist dann am Innenumfang mit der auf der Welle aufliegenden elastomeren Dichtlippe verbunden, während der Axialschenkel mit seiner äußeren Mantelfläche die statische Abdichtung und die Sitzfläche zum Einpressen des Wellendichtungsringes in das aufnehmende Maschinengehäuse mit Preßsitz bildet. Zur Verbesserung des Preßsitzes ist die Gehäusemantelfläche mit einer Elastomerschicht versehen, die entweder aus dem Elastomer des Wellendichtungsringes selbst besteht, oder durch Auftragen des Elastomers als beispielsweise Dichtlack gebildet ist. Bevorzugt besitzt dabei die Elastomerschicht ein Dichtprofil mit im Querschnitt etwa kammartiger oder wellenförmiger Kontur.

Zur Erreichung eines ausreichenden Preßsitzes des Wellendichtungsringes ist der Außendurchmesser des Wellendichtungsringes etwas größer als der Innendurchmesser des aufnehmenden Maschinengehäuses. Die Preßsitzverhältnisse und damit die wirkende Radialkraft zwischen Aufnahmebohrung und Sitz wird damit bestimmt aus der sich ergebenden Überdeckung aus den Toleranzen der Aufnahmebohrung und der Preßsitzzugabe. Die erforderlichen Werte der Preßsitzzugabe des Wellendichtungsringes sind durchmesserabhängig festgelegt, und sie liegen bei Wellendichtungsringen üblicher Durchmesser etwa im Bereich von Zehntel Millimeter.

Nach der US-A-4.026.563 besitzt zur Verringerung der Radialkraft beim Einpressen eines Wellendichtungsringes in ein Gehäuse die elastomere äußere Mantelfläche eines Wellendichtungsringes zwei Bereiche unterschiedlicher Durchmesser, wobei der Bereich mit dem größeren Durchmesser montageseitig angeordnet ist.

Konstruktiv bedingt sind beispielsweise bei Nockenwellenabdichtungen die den Wellendichtungsring aufnehmenden Maschinengehäuse vielfach in axialer Richtung geteilt. Dadurch besteht die Gefahr, daß sich das aufnehmende Maschinengehäuse beim Einpressen des Wellendichtungsringes mit hoher Pressung in seinen Teilungsebenen oder beim thermischen Ausdehnen des Wellendichtungsringes bei Betriebstemperatur öffnet, es entstehen axiale Spalte mit Abdichtproblemen im Maschinengehäuse und der Sitz des ellendichtungsringes im Maschinengehäuse wird gelockert.

Nach der DE-C-22 55 449 besitzt der Wellendichtungsring im Bereich der Maschinengehäuseteilungsebenen radial nach außen vorstehende elastomere Vorsprünge. Diese dichten zwar beim Aufweiten gebildete Spalte des Gehäuses ab, sie verhindern aber nicht das Aufweiten des Maschinengehäuses beim Einpressen des Wellendichtungsringes mit den nachteiligen Folgen eines gelockerten Preßsitzes.

Nach der DE-A-12 64 905 ist der Wellendichtungsring selbst in den Teilungsebenen des aufzunehmenden Maschinengehäuses geteilt. In diesem Fall ist aber auch die Dichtlippe selbst geteilt und es entstehen nur schwer zu beherrschende Abdichtprobleme an der abzudichtenden Welle.

Der vorliegenden Erfindung liegt daher die Aufgabe zugrunde, einen Wellendichtungsring gemäß Oberbegriff des Hauptpatentanspruches zu schaffen, der auch in einem geteilten aufnehmenden Maschinengehäuse ohne die geschilderten Nachteile mit ausreichendem Preßsitz bei guter statischer Abdichtung einsetzbar ist. Die Herstellung des Wellendichtungsringes soll dabei nicht wesentlich aufwendiger als herkömmliche Wellendichtungsringe sein.

Erfindungsgemäß wird diese Aufgabe durch einen Wellendichtungsring gelöst, dessen Axialschenkel sich zur Stirnseite des Axialschenkels konisch erweitert, wobei seine Durchmesseränderung etwa gleich dem Durchmesserunterschied der beiden Sitzflächenbereiche ist, und dessen Gehäuseringquerschnitt im Übergangsbereich zwischen Axialschenkel und Radialschenkel mit einem möglichst größeren Übergangsradius kurvenförmig verlaufend ausgebildet ist. Bevorzugt besitzt dabei die Sitzfläche am Außenumfang des Wellendichtungsringes zwei ringförmig umlaufende Bereiche unterschiedlicher Durchmesser, wobei der umlaufende Bereich des größeren Durchmessers an der montageseitigen Stirnseite der Sitzfläche liegt, die die Einpreßseite des Wellendichtungsringes beim Einpressen in das Gehäuse bildet. Die Größe seines Durchmessers ist etwa gleich dem vorgeschriebenen Wert. Der umlaufende Sitzflächenbereich mit dem kleineren Durchmesser liegt auf der der Montageseite abgewandten Bodenseite des Wellendichtungsringes und ist maximal etwa 0,1 bis 0,2 mm kleiner als der vorgeschriebene Minimalwert für den Preßsitz. Beim Einpressen des Wellendichtungsringes in das aufnehmende geteilte Maschinengehäuse wird der Ring mit hoher Einpreßkraft nur im montageseitigen Einpreßbereich in das Gehäuse eingepreßt. Die insgesamt auf das aufnehmende geteilte Maschinengehäuse wirkende radiale Pressung ist dadurch wesentlich reduziert und das Auseinanderpressen des Maschinengehäuses in den Teilungsebenen wird wesentlich reduziert. Der Gehäusering des Wellendichtungsringes besitzt dabei durch den mit relativ großem Übergangsradius zwischen Radialschenkel und Axialschenkel versehenen Übergangsbereich bodenseitig eine verringerte Formstabilität bzw. Formsteifigkeit, so daß beim eventuellen Auftreten zu großer Einpreßkräfte im stirnseitigen Sitzbereich der Gehäusering radial nachgibt und entsprechend der einwirkenden Einpreßkraft verformt wird. Die auf das aufnehmende Gehäuse wirkende gesamte Maximalpressung wird verringert und auch bei erhöhten Einpreßkräften ist dann das Auseinanderpressen des aufnehmenden geteilten Maschinengehäuses erschwert. Gefunden wurde ferner, daß der umlaufende Bereich mit größerem Durchmesser etwa ein Viertel bis ein Halb so groß wie die gesamte Breite der Stirnfläche zu sein braucht. Dann ist einmal ein sicherer Preßsitz des Wellendichtungsringes im aufnehmenden Maschinengehäuse gewährleistet und gleichzeitig die Gesamtpressung des Wellendichtringes im aufnehmenden Maschinengehäuse soweit reduziert, daß kein schädliches Auseinanderpressen des Maschinengehäuses mehr auftritt. Der ringförmig umlaufende Bereich mit entsprechend kleinerer Preßsitzzugabe wird beim Einpressen im wesentlichen nur elastisch verformt, so daß keine größeren radialen Preßkräfte entstehen und dieser Bereich im wesentlichen zur statische Abdichtfunktionen übernimmt.

Die Maße des erfindungsgemäßen Wellendichtungsringes sind vor allem abhängig vom verwendeten Dichtmaterial, dem Ringdurchmesser und der Einbausituation. Durchmesserabweichungen der Stirnfläche des Wellendichtungsringes bzw. seine Preßsitzzugaben sowie die Konizität des Gehäuseringes und der Übergangskrümmungsradius des Gehäuseringes müssen abgestimmt auf den Anwendungsfall festgelegt werden.

Durch die Erfindung ist somit ein Wellendichtungsring geschaffen, der ohne nachteilige Folgen im geteilten aufnehmenden Maschinengehäuse einsetzbar ist. Bei ausreichendem Preßsitz und guter statischer Abdichtung ist der erfindungsgemäße Wellendichtungsring in geteilte Aufnahmegehäuse einpreßbar, ohne daß sich das Aufnahmegehäuse mit Spaltbildungen in den Teilungsebenen aufweitet. Abdichtprobleme an einem gebildeten axialen Spalt und Lockerungen des Preßsitzes auch bei thermischen Ausdehnungen bei Betriebstemperatur entstehen nicht. Der erfindungsgemäße Wellendichtungsring ist darüber hinaus mit etwa dem gleichen Aufwand wie herkömmliche Wellendichtungsringe herstellbar und damit auch wirtschaftlich verwendbar.

Die Erfindung wird durch ein Querschnittsbild eines erfindungsgemäßen Wellendichtungsringes dargestellt.

Der Wellendichtungsring 1 besteht aus einem metallischen Gehäusering 2 mit einem Radialschenkel 3 und einem Axialschenkel 4, der an der Innenfläche eines elastomeren Dichtringes anvulkanisiert ist. Der Radialschenkel 3 ist dabei am Innenumfang mit der elastomeren Dichtlippe 5 des Wellendichtungsringes verbunden, und die äußere Mantelfläche des Axialschenkel 4 besitzt eine aus dem elastomeren Dichtungsmaterial bestehende Beschichtung 6, deren Außenfläche mit einem kammartigen Dichtprofil 7 versehen ist und die die Sitzfläche des Wellendichtungsringes 1 zum Einpressen in das aufnehmende Maschinengehäuse (nicht dargestellt) mit Preßsitz bildet.

Die äußere Mantelfläche der Beschichtung 6 besitzt zwei ringförmig umlaufende Bereiche 8, 9 unterschiedlicher Durchmesser 13, wobei der auf der Stirnfläche 10 liegende Bereich 8 auf der Montageseite einen größeren Durchmesser als der auf der Bodenseite 11 liegende Bereich 9 besitzt. Analog erweitert sich der Axialschenkel 4 des metallischen Gehäuseringes 2 konisch 14 zur Stirnflächenseite 10.

Der radial höhere ringförmig umlaufende Bereich 8 auf der stirnflächigen 10 Montageseite besitzt einen Durchmesser, der innerhalb der zulässigen Toleranzen dem vorgeschriebenen Durchmesser der Mantelfläche zur Erzielung des erforderlichen Preßsitzes beim Einpressen in das nicht dargestellte Aufnahmegehäuse entspricht. Der Sitzflächenbereich 9 der Bodenseite 11 besitzt einen Durchmesser, der etwa 0,1 bis 0,2 mm kleiner als der vorgeschriebene Durchmesser zur Erzielung des erforderlichen Preßsitzes im aufnehmenden Maschinengehäuse aber größer als der Innendurchmesser des aufnehmenden Maschinengehäuses ist. Beim stirnseitigen Einpressen des Wellendichtungsringes 1 in das Gehäuse bewirkt der stirnseitig ringförmig umlaufende Sitzbereich 8 den erforderlichen Preßsitz im aufnehmenden Maschinengehäuse, im bodenseitig ringförmig umlaufenden Sitzflächenbereich 9 wird nur das Kammprofil 7 elastisch verformt, so daß in diesem Bereich 9 bei guter statischer Addichtungswirkung kein Preßsitz entsteht. Die beim Einschieben des Wellendichtungsringes 1 in das Gehäuse wirkende Pressung ist somit verringert, so daß bei einem geteilten aufnehmenden Gehäuse kein Auseinanderpressen mit nachteiligen Folgen für die Abdichtung und den Sitz des Wellendichtungsringes 1 entsteht. Auf den konisch erweiterten Axialschenkel 4 des Gehäuseringes 2, dessen konische Erweiterung 14 an der Stirnseite 10 gegenüber der Bodenseite 11 etwa gleich dem Unterschied der Durchmesser der beiden ringförmig umlaufenden Sitzflächen 8, 9 ist, überträgt sich auf das stirnseitige Ende 10 die radiale Sitzflächenpreßkraft. Dadurch daß der Gehäusering 2 im Übergangsbereich 12 zwischen Axialschenkel 4 und Radialschenkel 3 einen vergrößerten Übergangsradius besitzt, erfolgt bei zu großer, auf das Ende des Axialschenkels 4 wirkender Radialkraft, eine radiale Verformung des Gehäuseringes 2. Dadurch wird die auf das aufnehmende Gehäuse wirkende Gesamtpressung und dadurch die Gehahr einer Aufweitung des Gehäuseringes auch bei Überbelastung verringert.

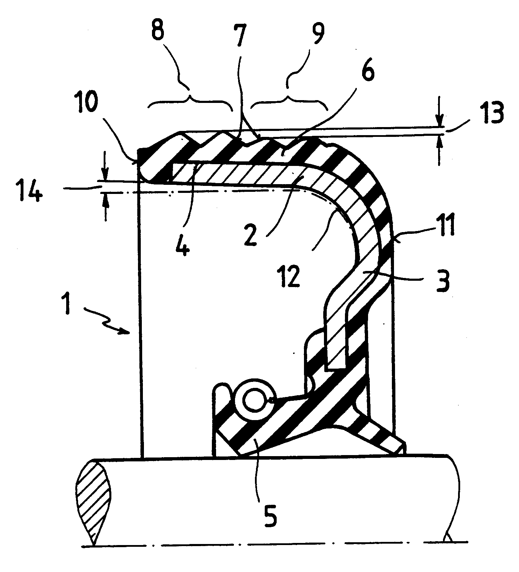

## Patentansprüche

1. Elastomerer Wellendichtungsring (1) zur Abdichtung rotierender Wellen in einem geteilten aufnehmenden Maschinengehäuse, bestehend aus einem metallischen Gehäusering (2) mit etwa rechtwinkligem Querschnitt, an dessen Radialschenkel (3) die mit ihrem Innenumfang radial auf der Welle aufliegende elastomere Dichtlippe (5) anvulkanisiert ist, und dessen Axialschenkel (4) am Außenumfang mit einem Elastomer beschichtet ist, welches die Sitzfläche (6) zum Einpressen des Wellendichtungsringes (1) in das geteilte Maschinengehäuse bildet, und welches am Außenumfang mindestens zwei ringförmig umlaufende Bereiche (8,9) unterschiedlicher Durchmesser besitzt, dadurch gekennzeichnet, daß sich der Axialschenkel (4) des Gehäuseringes (2) zur Stirnseite (10) des Axialschenkels (4) erweitert, wobei seine Durchmesseränderung (14) zur Stirnseite (10) etwa gleich dem Durchmesserunterschied (13) der beiden Sitzflächenbereiche (8,9) ist, und daß der Querschnitt des Gehäuserings (2) im Übergangsbereich (12) zwischen Axialschenkel (4) und Radialschenkel (3) mit einem möglichst großen Übergangsradius kurvenförmig verlaufend ausgebildet ist.

2. Wellendichtungsring nach Anspruch 1, dadurch gekennzeichnet, daß der ringförmig umlaufende Sitzflächenbereich (8) mit dem größeren Durchmesser einen Durchmesser besitzt, der gleich dem vorgeschriebenen Durchmesser zur Erzielung des erforderlichen Preßsitzes im Gehäuse innerhalb der zulässigen Toleranzen ist, und daß der Durchmesser des zweiten ringförmig umlaufenden Sitzflächenbereiches (9) etwa 0,1 bis 0,2 mm kleiner ist als der des Sitzflächenbereiches (8) mit dem größeren Durchmesser.

3. Wellendichtungsring nach den Ansprüchen 1 und 2, dadurch gekennzeichnet, daß der Sitzflächenbereich (8) mit dem größeren Durchmesser, der an der Stirnseite (10) des Wellendichtungsringes (1) angeordnet ist, die Montageseite des Wellendichtungsringes (1) bildet.

4. Wellendichtungsring nach den Ansprüchen 1 bis 3, dadurch gekennzeichnet, daß der stirnseitige (10), ringförmig umlaufende Sitzflächenbereich (8) mit dem größeren Durchmesser sich auf etwa ein Drittel bis zu einer Hälfte des gesamten Sitzflächenbereiches (6) erstreckt.

## Claims

1. Elastomeric shaft sealing ring (1) for sealing rotating shafts in a split receiving machine housing, consisting of a metal housing ring (2) with an approximately rectangular cross-section, to the radial arm (3) of which the elastomeric sealing lip (5), which rests radially on the shaft by its inner periphery, is attached by vulcanisation, and the axial arm (4) of which is coated on the outer periphery with an elastomer which forms the seat surface (6) for press fitting the shaft sealing ring (1) in the split machine housing and which has two or more annular circumferential regions (8, 9) of different diameter at the outer periphery, characterised in that the axial arm (4) of the housing ring (2) diverges conically towards the front side (10) of the axial arm (4), wherein its change in diameter (14) towards the front side (10) is approximately equal to the difference in diamater (13) of the two seat surface regions (8, 9) and in that the cross-section of the housing ring (2) extends in a curve in the transition region (12) between axial arm (4) and radial arm (3), with as large a transition radius as possible.

2. Shaft sealing ring according claim 1, characterised in that the annular circumferential seat surface region (8) with the larger diameter has a diameter which is equal to the prescribed diameter to obtain the required force fit in the housing within the permitted tolerances, and in that the diameter of the second annular cirumferential seat surface region (9) is about 0,1 to 0,2 mm smaller than that of the seat surface region (8) with the larger diameter.

3. Shaft sealing ring according to claims 1 and 2, characterised in that the seat surface region (8) with the larger diameter, which is arranged on the front side (10) of the shaft sealing ring (1), forms the assembly side of the shaft sealing ring (1).

4. Shaft sealing ring according to claims 1 to 3, characterised in that the front (10) annular circumferential seat surface region (8) with the lager diameter extends over about one-third to one-half of the total seat surface region (6).

## Revendications

1. Joint d'arbre élastomère (1) pour l'étanchéité d'arbres rotatifs dans un carter de machine récepteur en plusieurs parties, consistant en un carter annulaire (2) métallique avec une section sensiblement en angle droit, sur la branche radiale (3) duquel la lèvre d'étanchéité (6) élastomère est vulcanisée avec sa périphérie interne reposant radialement sur l'arbre, et dont la branche axiale (4) est recouverte à sa periphérie externe avec un élastomère, qui forme la surface d'appui (6) lors de l'insertion du joint d'arbre (1) dans le carter de machine en plusieurs parties et qui présente à sa périphérie externe au moins deux zones (8,9) annulaires périphériques de diamètre différent, caractérisé en ce que la branche axiale (4) du carter annulaire (2) s'élargit vers le côté frontal (10) de la branche axiale (4), d'où il résulte que sa variation de diamètre (14) vers le côté frontal (10) est sensiblement égale à la différence de diamètre (13) des deux zones (8,9) de sruface d'appui, et que la section du carter annulaire (2) dans la zone de transition (12) entre la branche axiale (4) et la branche radiale (3) est formée avec un rayon de transition aussi grand que possible d'allure en forme de courbe.

2. Joint d'arbre selon la revendication 1, caractérisé en ce que la zone (8) de surface d'appui annulaire périphérique avec le plus grand diamètre présente un diamètre qui est égal au diamètre prescrit pour l'obtention de l'ajustage serré requis dans le carter dans les limites des tolérances admises, en ce que le diamètre de la seconde zone (9) de surface d'appui annulaire périphérique est plus petit d'environ 0,1 à 0,2 mm que celui de la zone (8) de surface d'appui avec le plus grand diamètre.

3. Joint d'arbre selon les revendications 1 et 2, caractérisé en ce que la zone (8) de surface d'appui avec le plus grand diamètre, qui est disposée sur le côté frontal (10) du joint d'arbre (1), forme le côté montage du joint d'arbre (1).

4. Joint d'arbre selon les revendications 1 à 3, caractérisé en ce que la zone (8) de surface d'appui annulaire périphérique située sur le côté frontal (10) avec le plus grand diamètre s'étend environ sur le tiers jusqu'à la moitié de la zone (6) de surface d'appui totale.
